# EUROPÄISCHE PATENTANMELDUNG

(11) **EP 2 476 537 A2**
(43) Veröffentlichungstag der Anmeldung: **18.07.2012**
(21) Anmeldenummer: 12000246.4
(22) Anmeldetag: 17.01.2012
(51) Int. Cl.: B29C 51/08

(54) **Druckgas-Thermoform-Vorrichtung**

(30) Priorität: 17.01.2011 DE 202011001624 U; 17.01.2011 DE 202011001623 U; 17.01.2011 DE 202011001622 U; 17.01.2011 DE 202011001618 U
(71) Anmelder: Gizeh Verpackungen GmbH & Co.KG, D-51702 Bergneustadt (DE)
(72) Erfinder: Jung, Ralf, 51702 Bergneustadt (DE); Lütticke, Oliver, 57489 Drolshagen (DE); Eisenmann, Bernhard, 87250 Tengen (DE)
(74) Vertreter: Schumacher, Horst

(57) **Zusammenfassung**

Eine Druckgas-Thermoform-Vorrichtung zum gleichzeitigen Herstellen von mehreren Kunststoffbehältern aus thermoplastisch verformbaren Kunststofffolien oder -platten (5) umfasst ein erstes Teil (1) oder Oberteil und ein zweites Teil (2) oder Unterteil. Das zweite Teil (2) umfasst mindestens eine, insbesondere mehrere, formgebende Kavität/Kavitäten (3). Das erste Teil (1) umfasst je Kavität (3) einen Ruheraum (20) und/oder einen, insbesondere von dem Ruheraum (20) aufgenommenen, innen hohlen Niederhalter (4) zum zeitweisen Festlegen der Kunststofffolie oder -platte (5) sowie einen innerhalb des Ruheraums (20) oder des Niederhalters (4) verschiebbaren, mit Formluft einsparenden Mitteln versehenen Formstempel (6). Einem Raum/ Räumen (7) zwischen der Wandung des Ruheraums (20) oder den Niederhaltern (4), der Kunststofffolie oder -platte (5) und den Formstempeln (6) ist Formluft unter Druck zuführbar. Die Druckgas-Thermoform-Vorrichtung umfasst einen Formluft-Verdrängungskörper (8) je Kavität (3), der sich zumindest mit einem Teil seiner Länge durch zumindest eine Teillänge des Ruheraumes (20) oder des Niederhalters (4) und des ersten Teils (1) hindurch erstreckt. Um eine Formlufteinsparung bei einer möglichst gleichmäßigen Ausprägung des Öffnungsrandes von in einer Druckgas-Thermoform-Vorrichtung gleichzeitig hergestellten Kunststoffbehältern zu ermöglichen, können Mittel zum gemeinsamen Verlagern des zumindest einen Formluft-Verdrängungskörpers (8) mit dem Formstempel (6) bezüglich des ersten Teils (1) in gegenüber der Umgebungsatmosphäre gedichteter, gleitend geführter Weise vorgesehen sein. Es kann eine mehrere Niederhalter (4) zusammenfassende Kolbenplatte (15) vorgesehen sein, die innerhalb einer zylinderartigen Aussparung (16) des ersten Teils (1), insbesondere pneumatisch oder hydraulisch, verfahrbar ist und die zugehörenden Niederhalter (4) zum lösbaren Festlegen der Folie (5) vor- und zurückbewegt.

## Beschreibung

Die Erfindung betrifft eine Druckgas-Thermoform-Vorrichtung zum Herstellen von Kunststoffbehältern aus thermoplastisch verformbaren Kunststofffolien oder Kunststoffplatten mit den Merkmalen des Oberbegriffs des Anspruchs 1. Demnach umfasst die Vorrichtung ein erstes Teil, wie ein Oberteil, und ein zweites Teil, wie ein Unterteil. Das zweite Teil umfasst oder trägt zumindest eine, bevorzugt mehrere formgebende Kavität/Kavitäten, die in der Regel Bestandteil eines Formeneinsatzes in dem ersten Teil darstellen. Das erste Teil umfasst je Kavität einen Ruheraum und/oder einen, insbesondere von dem Ruheraum aufgenommenen, innen hohlen Niederhalter, um die warm zu verformende Kunststofffolie oder -platte ― nachfolgend als Folie bezeichnet ― in einem Randbereich bezüglich des ersten oder zweiten Teils respektive Unter- oder Oberteils und dort bezüglich der Kavität zeitweise festzulegen. Der zum Festlegen der Folie relativ zur Kavität verlagerbare Niederhalter ist innen hohl und an seiner Rückseite offen. Das erste Teil umfasst ferner einen innerhalb des Ruheraums oder jedes Niederhalters verschiebbaren Formstempel, der auch als Streckhelfer oder Vorstrecker bezeichnet wird. Dieser Formstempel ist innerhalb des innen hohlen Niederhalters gegen die zu verformende Folie in Richtung auf die Kavität zu verlagerbar, so dass er den Formgebungsvorgang einleitet. Dem zwischen dem Niederhalter, der Folie sowie dem Formstempel eingeschlossenen Raum ist so genannte Formluft als unter Überdruck stehendes Gas zuführbar, um den Formgebungsschritt zu vervollständigen bis sich die Folie an die Kontur der zugehörenden Kavität angelegt hat. Außerdem umfasst die Vorrichtung Formluft einsparende Mittel je Kavität.

### TECHNOLOGISCHER HINTERGRUND

Aus der DE 103 26 670 B3 und aus der DE 10 2007 037 748 B3 ist es bekannt, Druckluft, für den Formgebungsschritt einzusparen. Dies geschieht dadurch, dass dem Formstempel auf seiner Rückseite ein plattenförmiger Kolben ― nachfolgend als Kolbenplatte bezeichnet ― zugeordnet wird, die gegenüber dem innen hohlen Niederhalter dichtend ausgebildet ist. Zu diesem Zweck ist der Niederhalter als Zylinder für die Aufnahme der Kolbenplatte ausgestaltet. Dadurch entsteht auf der Rückseite der Kolbenplatte innerhalb des Niederhalters ein nach außen hin abdichtbarer zylindrischer Hohlraum, der sich beim Vortreiben des Formstempels mittels einer Kolbenstange gegen die zu verformende Folie in dem Maße vergrößert, in dem der Formstempel und die Kolbenplatte gemeinsam in Richtung auf die Kavität zu bewegt werden. Dieser zylindrische Hohlraum kann mit Außenluft und muss daher nicht mit Formluft gefüllt werden. Allerdings muss der zylindrische Hohlraum zwischen dem Niederhalter und der Kolbenplatte während des Druckgas-Verformungsschrittes gegenüber dem formstempelseitigen Raum, also auf der gegenüberliegenden Seite der Kolbenplatte, gasdicht verschlossen werden. Dies muss in einer Weise geschehen, dass die Abdichtung zwischen dem Niederhalter und der Kolbenplatte dem nicht unerheblichen Formluftdruck standhalten kann. Außerdem muss die Kolbenplatte in der Druckgas-Verformungsphase in ihrer Position festgehalten werden, d.h. sie soll dem Druck der Formluft nicht nachgeben, also nicht nach rückwärts ausweichen. Zu diesem Zweck ist die Kolbenplatte auf ihrem Umfang mit einer unter Druck an die Zylinderwand des innen hohlen Niederhalters anpressbaren Membran versehen. Deren Rückseite wird hierzu über Gaszuführkanäle innerhalb der Kolbenplatte und einer durch die Rückwanddurchbrechung des Niederhalters geführten rohrförmigen Kolbenstange mit Druckluft versorgt. Außerdem muss die Kolbenplatte über eine an ihrem Bewegungsstempel angreifende Sperreinrichtung festgeklemmt werden. Die Membrandichtung und die Sperreinrichtung müssen gesteuert bewegt werden können. Hierzu wird unter anderem ein Sperrluft-Versorgungssystem für die Membrandichtung benötigt. Die Formlufteinsparung wird also durch hohen technischen Aufwand erkauft.

Aus der DE 10 2007 037 748 B3 ist es im Übrigen bekannt, Druckluft, für den Formgebungsschritt innerhalb des innen hohlen Niederhalters in einem vom Formstempel separierten Zylinderraum bereit zu halten, um diese für den Druckgas-Formschritt schlagartig verfügbar zu machen. Zu diesem Zweck ist der Niederhalter als Zylinder für die Aufnahme einer Kolbenplatte ausgestaltet. Dadurch entsteht auf der Rückseite der Kolbenplatte innerhalb des Niederhalters der nach außen hin abdichtbare Zylinderraum. Ferner ist eine Einrichtung zum gegebenenfalls auch eigenständigen Bewegen der Kolbenplatte vorgesehen. Der so ausgestattete Niederhalter ist im Bereich seiner Rückwand in eine zylindrische Ausnehmung einer Kopfplatte des Oberteils axialbeweglich eingesetzt und wird von einer in der Ausnehmung der Kopfplatte wirksamen Druckfeder in die Niederhalteposition gedrängt. Der Zylinderraum des Niederhalters und die Ausnehmung in der Kopfplatte werden über eine permanente Fluidverbindung auf gleichem Druck gehalten, um die Niederhaltekraft nicht zu beeinflussen. Ein gemeinsamer Antrieb zum gleichmäßigen und gleichzeitigen Verfahren der Niederhalter für alle gleichzeitig betriebenen Kavitäten ist demnach nicht vorgesehen.

Dies ist auch in den Schriften DE 10 2006 020 673 A1 und FR 2 722 135 A1 nicht vorgesehen, welche jeweils Formvorrichtungen offenbaren, bei denen ohne besondere Drucklufteinsparmaßnahmen in einem verfahrbaren Formluft komprimierenden Stempel jeweils ein Tiefziehwerkzeug relativ zu dem Stempel verschiebbar angeordnet ist.

### DARSTELLUNG DER ERFINDUNG

Davon ausgehend liegt der Erfindung die Aufgabe zugrunde, alternative Mittel anzugeben, die Formlufteinsparung bei einer gleichmäßigen Ausprägung des Öffnungsrandes von in einer Druckgas-Thermoform-Vorrichtung gleichzeitig hergestellten mehreren Kunststoffbehältern zu ermöglichen ― ohne dabei ein etwaiges Auswechseln der Niederhalter zu erschweren. Zur Lösung dieser Aufgabe wird eine Druckgas-Thermoform-Vorrichtung mit den Merkmalen des Anspruchs 1 vorgeschlagen. Demnach sind Mittel vorgesehen zum gemeinsamen Verlagern eines Formluft-Verdrängungskörpers mit dem Formstempel bezüglich des ersten Teils in gegenüber der Umgebungsatmosphäre gedichteter, gleitend geführter respektive in gleitverschieblicher Weise. Diese wirken in solcher Weise, dass der Formluft-Verdrängungskörper bezüglich des ersten Teils abgedichtet bis nach außerhalb des ersten Teils geführt wird. Eine zylindrische Dichtfläche für den Formluft-Verdrängungskörper innerhalb des Ruheraums oder innerhalb des innen hohlen Niederhalters entfällt. Beim Vortreiben des Formstempels kann die Luft, die sich nach dem Einspannen der Folie oder Platte in dem Raum zwischen dem Ruheraum oder dem Niederhalter, der Folie oder Platte und dem Formstempel befindet, mittels des Formluft-Verdrängungskörpers gewünschten Falls komprimiert werden. Sobald Formluft in den verbleibenden Formluftraum unter Druck eingeführt wird, um den Druckgas-Thermoverformungsschritt auszuführen, kann das Gas innerhalb des Formluftraumes bereits vorgespannt sein und ein nur relativ kleines Restvolumen an Druckgas muss unter Formluftdruck zugespeist werden. Die Funktionen des "Oberteils" und des "Unterteils" können vertauscht werden, ohne die Erfindungslösung zu verlassen.

Es kann im Übrigen bei einer gattungsgemäßen Druckgas-Thermoform-Vorrichtung ferner eine mehrere Niederhalter zusammenfassende Kolbenplatte vorgesehen sein, die innerhalb einer zylinderartigen Aussparung des ersten Teils, insbesondere pneumatisch oder hydraulisch, verfahrbar ist. Diese Lösung ist unabhängig von Anspruch 1 von eigenständig erfinderischer Bedeutung. Die zugehörenden Niederhalter werden somit zum lösbaren Festlegen der Folie gemeinsam und mit gleichmäßiger Kraft vor- und zurückbewegt und die Niederhalterbewegung insgesamt erheblich vereinfacht. Die druckbeaufschlagte Fläche dieser Kolbenplatte wird aufgrund der durch den Niederhalter und das Oberteil geführten Formluft-Verdrängungskörper vergleichsweise klein, so dass die Niederhaltekräfte gefühlvoll eingestellt werden können. Durch die gemeinsame Aufhängung der Niederhalter wird u. A. die Dickenschwankung der Mündungsränder der herzustellenden Kunststoffbehälter von Kavität zu Kavität innerhalb eines Schusses minimiert. Die Mündungsränder können z. B. als so genannter Siegelrand zum Heißversiegeln des Behälters mit einer Verschlussplatte oder -folie verwendet werden. Eine mehre Niederhalter zusammenfassende Kolbenplatte ist unabhängig von Anspruch 1 von eigenständig erfinderischer Bedeutung.

Vorzugsweise wird der Formluft-Verdrängungskörper in dem ersten Teil gleitverschieblich aufgenommen. Dies geschieht in solcher Weise, dass der Formluft-Verdrängungskörper bezüglich des ersten Teils abgedichtet bis nach außerhalb des Oberteils geführt wird. Die Formluft-Verdrängungskörper sind gemeinsam mit den Formstempeln bezüglich des ersten Teils axial verlagerbar. Beim Vortreiben der Formstempel wird demnach die Luftmenge, die sich nach dem Einspannen der Folie in dem Raum zwischen den Niederhaltern, der Folie und den Formstempeln befindet, nicht mehr, wie in der Vergangenheit, vergrößert sondern eher konstant gehalten oder gar vermindert. Sobald Formluft in den verbleibenden Formluftraum unter Druck eingeführt wird, um den Druckgas-Thermoverformungsschritt auszuführen, kann das Gas innerhalb des Formluftraumes bereits vorgespannt sein und ein nur relativ kleines Restvolumen an Druckgas muss unter Formluftdruck zugespeist werden. Die Funktionen des "Oberteils" und des "Unterteils" können vertauscht werden, ohne die Erfindungslösung zu verlassen.

Insgesamt kann eine bedeutende Einsparung an unter Druck stehender Formluft erreicht werden. Das Einsparungspotential liegt in einer Größenordnung von 30% bis etwa 80% in Bezug auf das für den Arbeitshub des Formstempels notwendige Volumen innerhalb des innen hohlen Niederhalters. Wegen der erwähnten möglichen Vorkomprimierung schon vor dem Vortreiben des Formstempels, kann die Druckgaseinsparung noch höher ausfallen, als bei gattungsgemäßen Lösungen gemäß DE 103 26 670 B3. Vor allem aber werden die vielen zusätzlichen Bauteile eingespart, wie sie gemäß DE 103 26 670 B3 für die dortige Formlufteinsparung erforderlich sind. Diese Lösung ist unabhängig von Anspruch 1 von eigenständig erfinderischer Bedeutung.

Wenn eine mehrere Niederhalter zusammenfassende, innerhalb des ersten Teils vor- und zurückbewegbare Niederhalter-Tragplatte vorgesehen ist, kann ein Niederhalterwechsel für die Umstellung auf ein anderes Produkt vereinfacht werden, indem von außen am dem ersten Teil betätigbare Verriegelungselemente, wie Schieber, zum lösbaren Verbinden der Niederhalter mit der Niederhalter-Tragplatte, die auch als die mehreren Niederhalter zusammenfassende Kolbenplatte genutzt werden kann, vorgesehen sind. Dadurch kann, z. B. bei einem Produktwechsel, einem Wartungsfall oder einer Reparatur, eine umfangreiche Demontage der Druckgas-Thermoform-Vorrichtung vermieden werden. Diese Lösung ist unabhängig von Anspruch 1 von eigenständig erfinderischer Bedeutung.

Es ist nun auf verschiedene Weise möglich, die Erfindung auszuführen, insbesondere wenn Formluft-Verdrängungskörper vorgesehen sind:
Grundsätzlich wird man den Querschnitt des Formluftverdrängungskörpers so wählen, dass er den Hohlraum des innen hohlen Niederhalters bis auf einen radialen Restluftspalt ausfüllt. Die Breite eines zwischen der Außenoberfläche des Formluft-Verdrängungskörpers und der Innenfläche des Ruheraumes oder des Niederhalter verbleibenden Radialspaltes sollte bevorzugt 0,01 mm bis 15 mm, vorzugsweise 0,1 mm bis 5 mm betragen. Ergänzend oder alternativ sollte im Bereich des Fahrwegs des Formluft-Verdrängungskörpers das Querschnittsflächenverhältnis zwischen dem Innenquerschnitt des Ruheraumes oder des Niederhalters und der Außenoberfläche des Formluft-Verdrängungskörpers zwischen 1:0,4 bis 1:0,999 und
vorzugsweise zwischen 1:0,8 und 1:0,99 betragen. Eine Abdichtung zwischen der Hohlraumwandung des Niederhalters und dem Formluftverdrängungskörper ist - im Gegensatz zur DE 103 26 670 B3 - entbehrlich, da der Ringraum zwischen der Außenoberfläche des Formluft-Verdrängungskörpers und der Hohlraumwandung des Niederhalters bis auf einen unbedeutenden Rest verkleinert werden kann und deshalb für das Aufbringen an Thermoformluft relativ unbedeutend ist.

Eine weiter Formlufteinsparung ergibt sich daraus, dass bei einer gattungsgemäßen Druckgas-Thermoform-Vorrichtung eine mehrere Formstempel rückseitig zusammenfassenden, bezüglich des ersten Teils vor- und zurückbewegbaren Formstempel-Tragplatte eingesetzt wird, die als Formgas-Verteiler ausgestaltet ist und eine Formgas-Verteilanordnung bildet. Die Formgas-Verteilanordnung kann vorzugsweise Einzelventile für die Versorgung jedes Formluftraumes mit Formgas aufweisen. Diese Lösung ist unabhängig von Anspruch 1 von eigenständig erfinderischer Bedeutung.

Soweit ein Niederhalter zum Einsatz kommt, kann er rückwandlos ausgeführt sein, d.h., dass der Niederhalter nicht mehr aus dem Vollen gedreht oder mit einer besonderen Rückwand versehen wird. Vielmehr kann der Niederhalter durch ein Rohr gebildet werden. Der Werkstoff für ein solches Rohr kann besonders gut an seine Aufgabe angepasst ausgewählt werden. Einfache Dreh- Fräs- oder Schleifarbeiten sind in der Regel schon ausreichend, um z. B. die Rohrenden für das Festlegen der zu verformenden Folie einerseits und den Anschluss an einen Axial-Antrieb anzupassen. Eine besondere Abdichtung gegenüber dem Formluft-Verdrängungskörper und /oder eine Gleitführung desselben durch den Niederhalter ist in der Regel entbehrlich.

Eine Abdichtung zwischen der Ruheraumwandung oder der Hohlraumwandung des Niederhalters und dem Formluftverdrängungskörper ist ― im Gegensatz zur DE 103 26 670 B3 ― entbehrlich, da der Ringraum zwischen der Außenoberfläche des Formluft-Verdrängungskörpers und der Hohlraumwandung des Niederhalters bis auf einen unbedeutenden Rest verkleinert werden kann und deshalb für das Aufbringen an Thermoformluft relativ unbedeutend ist.

Da die Kavität und ggf. der Niederhalter und/oder der Formstempel zum Formen des Kunststoffbehälters für unterschiedliche Größen und Formen an Kunststoffbehältern angepasst werden müssen, wird zumindest eines dieser Bauteile bei einem Produktwechsel ausgetauscht gegen entsprechend dem neuen Produkt formangepasste Bauteile. Ein Austausch des Formluft-Verdrängungskörpers ist häufig entbehrlich, denn auf einer Druckgas-Thermoformmaschine werden in der Regel solche Kunststoffbehälter produziert, die einen einigermaßen ähnlichen Maximalquerschnitt an ihrem Öffnungsrand aufweisen und die sich im Wesentlichen nur hinsichtlich ihrer Behältertiefe oder hinsichtlich der Behälteraußenkontur voneinander unterscheiden. Deshalb ist der Radialspalt in dem zwischen der Innenwand des Niederhalters und der Außenfläche des Formluft-Verdrängungskörpers verbleibenden Restluft-Ringraum für verschiedene auf derselben Druckgas-Thermoformmaschine hergestellte Kunststoffbehälter nicht allzu unterschiedlich, so dass die Formluftverbräuche für verschiedene Produkte sich bei vergleichbarer Behälterhöhe nicht nennenswert unterscheiden.

Wenn der Formluft-Verdrängungskörper in seinem Inneren die Formluft führt, wird dadurch die Gestaltung des Niederhalters und des Oberteils vereinfacht, denn die Formluftzuführleitung kann direkt an dem außerhalb des Oberteils sich befindenden Kopf des Formluft-Verdrängungskörpers oder seines stirnendseitigen Halters angeschlossen werden. Aufwendige Formluftführungskanäle innerhalb des Oberteils und des Niederhalters entfallen.

Wenn der Formluft-Verdrängungskörper in seinem dem Formstempel nahe gelegenen Endbereich mindestens ein Formluftdurchlassventil aufweist, wird die Temperatursteuerung des Formgebungsprozesses vereinfacht. Vor allem aber verringert sich dadurch die Einspeisedauer für Druckgas und mithin die Dauer des Thermo-Formgebungsprozesses.

Eine weitere Vereinfachung der Formluftein- und/oder -ausspeisung ergibt sich, wenn mehrere Formstempel und Formluft-Verdrängungskörper mittels einer Formstempel-Tragplatte zusammengefasst und bezüglich des ersten Teils vor- und zurückbewegbar sind und die Formstempel-Tragplatte als Formluft-Verteiler ausgestaltet ist, die zusammen mit den Formluft-Verdrängungskörpem eine Formluft-Verteilanordnung bildet. Bevorzugt weist die Formgas-Verteilanordnung Einzelnventile für die Versorgung jedes Formgashohlraumes im Niederhalter mit Formgas auf. Auch diese Lösung ist unabhängig von Anspruch 1 von eigenständig erfinderischer Bedeutung.

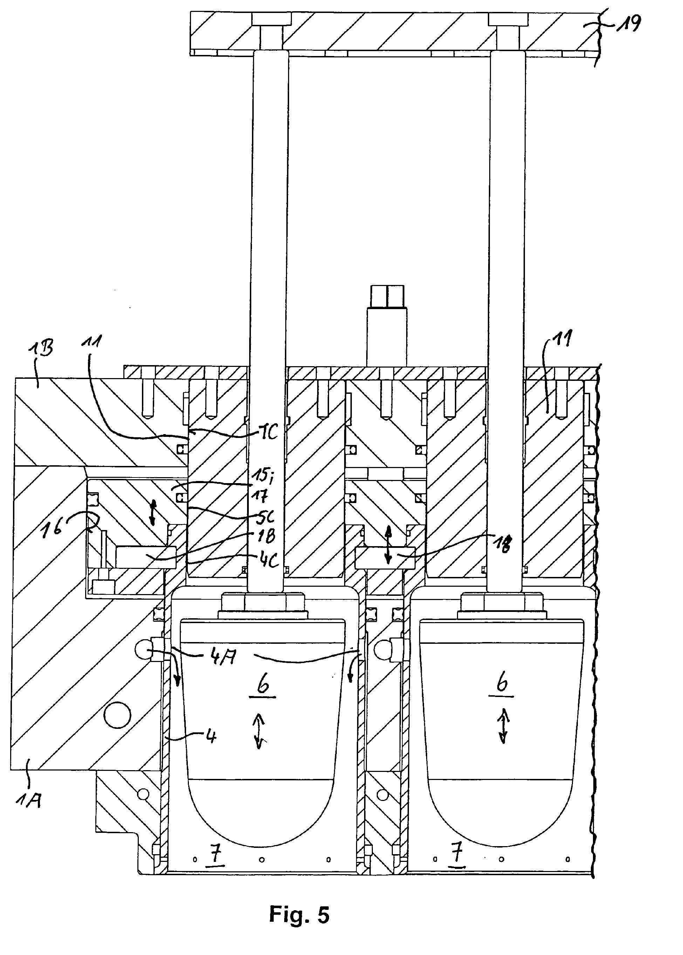

Wenn ein in seiner Längsrichtung durchbohrter Verschlusskörper vorgesehen ist, um die Durchbrechung des Oberteils für den Formluft-Verdrängungskörper nach außen dichtend zu verschließen und um eine den Formstempel tragende Kolbenstange gleitgedichtet aufzunehmen, kann dadurch der Formluft-Verdrängungskörper gegen ein konventionelles Werkzeug im Bedarfsfall ausgetauscht werden (siehe z. B. Fig. 5).

Die vorgenannten sowie die beanspruchten und in den Ausführungsbeispielen beschriebenen erfindungsgemäß zu verwendenden Bauteile unterliegen in ihrer Größe, Formgestaltung, Materialauswahl und technischen Konzeption keinen besonderen Ausnahmebedingungen, so dass die in dem Anwendungsgebiet bekannten Auswahlkriterien uneingeschränkt Anwendung finden können

Weitere Einzelheiten, Merkmale und Vorteile des Gegenstandes der Erfindung ergeben sich aus den Unteransprüchen, sowie aus der nachfolgenden Beschreibung und der zugehörigen Zeichnung, in der - beispielhaft - ein Ausführungsbeispiel einer Druckgas-Thermoform-Vorrichtung dargestellt ist. Auch einzelne Merkmale der Ansprüche oder der Ausführungsformen können mit anderen Merkmalen anderer Ansprüche und Ausführungsformen kombiniert werden.

### KURZBESCHREIBUNG DER FIGUREN

In der Zeichnung zeigen:
- Fig. 1: eine Druckgas-Thermoform-Vorrichtung in einer ersten Ausführungsform in geöffneter Stellung des Oberteils bezüglich des Unterteils in perspektivischer Darstellung, ausschnittsweise und zum Teil im Vertikalschnitt;
- Fig. 2: dieselbe Druckgas-Thermoform-Vorrichtung bei geschlossenem Ober-und Unterteil vor dem Verformungsschritt im Vertikalschnitt;
- Fig. 3: dieselbe Druckgas-Thermoform-Vorrichtung bei geschlossenem Ober-und Unterteil und abgesenktem Formstempel vor dem Druckgas-Thermoformschritt;
- Fig. 4: dieselbe Druckgas-Thermoform-Vorrichtung bei geschlossenem Ober-und Unterteil und abgesenktem Formstempel im Zustand der abschließenden Verformung der Folie zu einem Kunststoffbehälter mit Druckgas ;
- Fig. 5: eine zu Figuren 1 bis 4 alternative Ausführungsform einer Druckgas-Thermoform-Vorrichtung im Zustand der abgeschlossenen Verformung;
- Fig. 6A/B: eine weitere alternative Ausführungsform einer Druckgas-Thermoform-Vorrichtung in der Phase der Druckgas-Befüllung (Fig.6A) und in in der Phase der Druckgas-Entleerung (Fig.6B) sowie

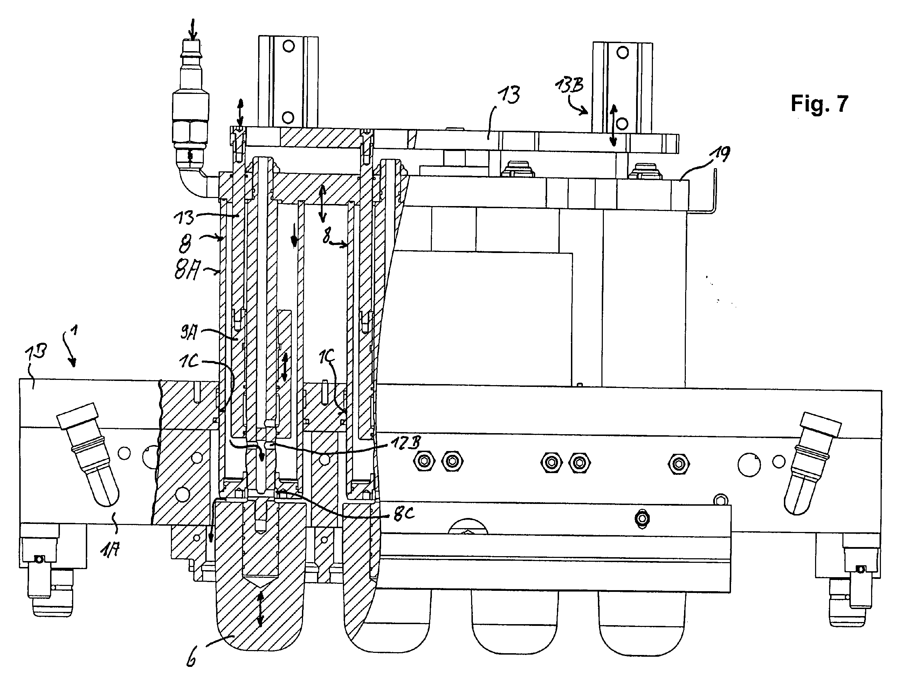

- Fig. 7: von einer noch anderen Ausführungsform einer Druckgas-Thermoform-Vorrichtung das Oberteil ohne Niederhalter.

### DETAILLIERTE BESCHREIBUNG VON AUSFÜHRUNGSBEISPIELEN

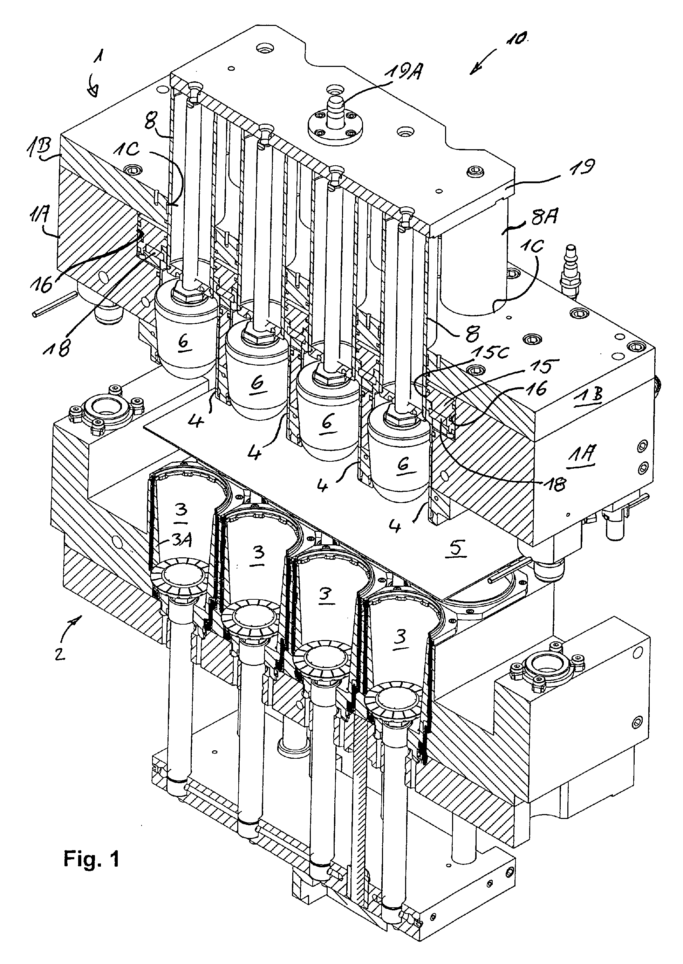

Aus Figuren 1 bis 4 ist der allgemeine Aufbau einer Druckgas-Thermoform-Vorrichtung 10 nach der Erfindung ersichtlich. Sie umfasst ein Oberteil 1 und ein Unterteil 2, welches in dem dargestellten Ausführungsbeispiel acht formgebende Kavitäten 3 umfasst, zum Beispiel in Gestalt auswechselbarer Formeneinsätze 3A. Das Oberteil 1 kann je Kavität einen innen hohlen Niederhalter 4 tragen zum zeitweisen Festlegen einer Kunststofffolie oder ―platte 5, die, in auf Verformungstemperatur aufgeheizter Form, für jeden Schuss (Produktionssequenz) in Platten- oder Bahnenform zwischen Ober- und Unterteil eingeführt wird.

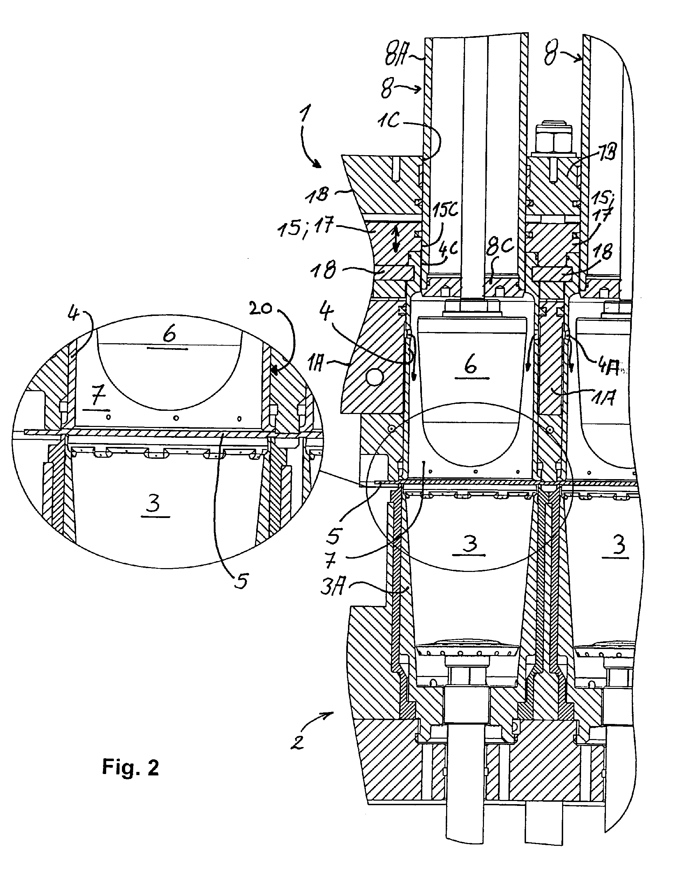

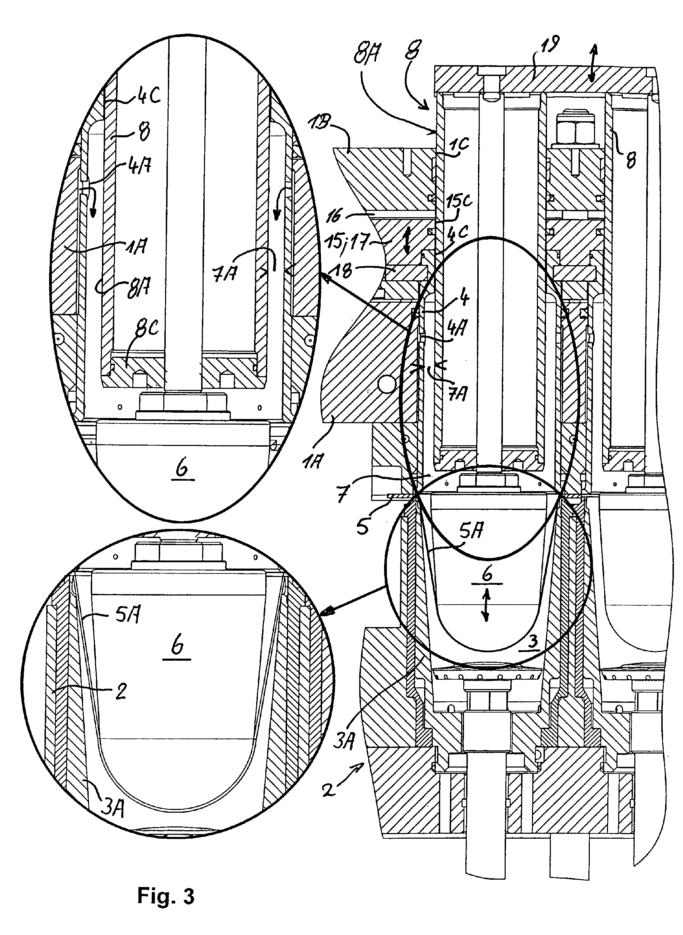

Wie aus Figur 2 ersichtlich, hat der Niederhalter 4 die Funktion, nach dem Schließen der Druckgas-Thermoform-Vorrichtung durch Zusammenfahren von Ober- und Unterteil die Kunststofffolie oder ―platte 5 fest auf dem (oben liegenden) formgebenden Mündungsrand der Kavität 3 festzuhalten und dem dadurch sich ausbildenden Rand des herzustellenden Kunststoffbehälters die gewünschte Oberflächenstruktur aufzuprägen. Hierzu ist der Niederhalter 4 in Bezug auf das Oberteil 1 um eine kurze Wegstrecke von z. B. 1 Millimeter axial verfahrbar und entsprechend in einer zugehörenden zylindrischen Ausnehmung einer unteren Gehäusehälfte 1A des blockartigen Oberteils 1 gleitbeweglich eingepasst. In der in Figur 1 gezeigten Ruheposition befindet sich innerhalb des Niederhalters 4 ein aus dem Oberteil 1 heraus vorschiebbarer Formstempel 6, auch als Vorreckstempel bekannt. Seine Funktion wird aus Figur 3 deutlich, aus der ersichtlich ist, wie die Kunststofffolie oder ―platte durch Vorschieben des Formstempels 6 zu einem Behälterrohling 5A vorgeformt wird, wobei sich Wandstärkenunterschiede im Verformungsbereich der Kunststofffolie (wie üblich) einstellen.

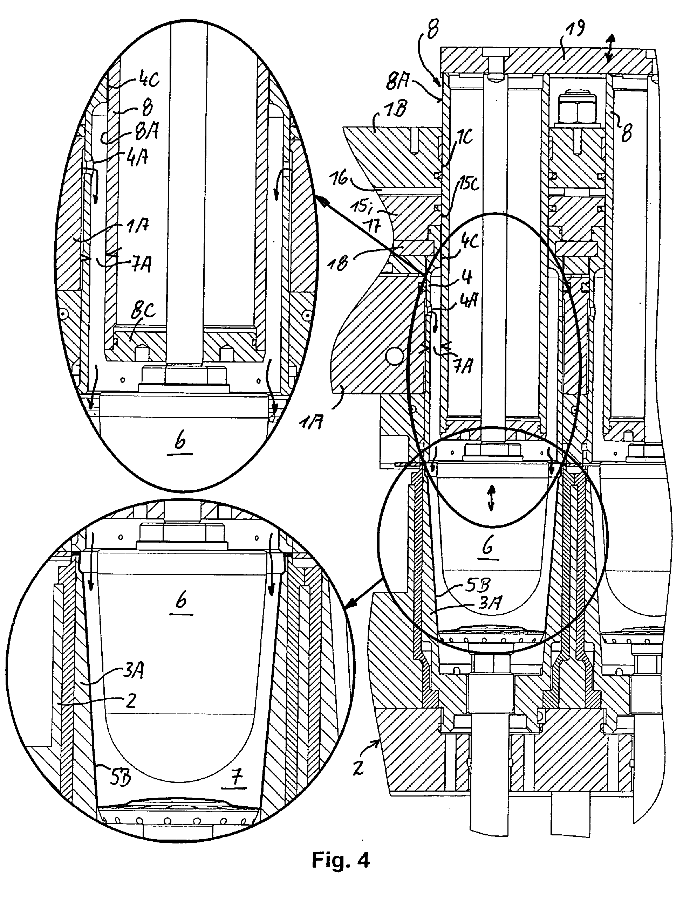

Durch das Zusammenfahren von Ober- und Unterteil entsteht zwischen dem Niederhalter 4, der Kunststofffolie oder ―platte 5 sowie dem Formstempel 6 ein allseits gedichteter Raum 7. In diesen wird (wie üblich), durch geeignete Ventile gesteuert, unter Überdruck stehende sogenannte Formluft, z. B. bei 4B, eingepresst. Dies geschieht in der Regel erst in der in Figur 4 dargestellten Produktionsphase, d. h. im Anschluss an das Vorformen des Behälters durch den Formstempel 6. Die Formluft dringt dann zwischen dem vorgeformten Behälterrohling 5A und dem Formstempel 6 ein und presst das vorgeformte Material des Behälterrohlings an die Wände des Formeneinsatzes 3A an. Insoweit ist der Prozess bekannt, und ebenso das nachfolgende Abtrennen der einzelnen fertigen Behälter 5B aus der zunächst zusammenhängenden Kunststoffplatte, das Kühlen der Form und das Ausstoßen der fertigen Behälter 5B.

Um nun den Einsatz an Formluft so weit wie möglich zu verringern, ist je Kavität 3 ein Formluft-Verdrängungskörper 8 vorgesehen. Dieser erstreckt sich zumindest mit einem Teil seiner Länge durch zumindest eine Teillänge des Niederhalters 4 und des Oberteils 1 hindurch. In den Arbeitsphasen gemäß Figuren 1 und 2 erstreckt sich der Formluft-Verdrängungskörper 8 lediglich durch eine obere Gehäusehälfte 1 B des Oberteils 1, sowie eine noch zu beschreibende Kolbenplatte 15 und den Kopfbereich des Niederhalters 4. In den Produktionsschritten nach Figuren 3 und 4 erstreckt sich der Formluft-Verdrängungskörper 8 auch durch die untere Gehäusehälfte 1A des Oberteils 1 und die ganze oder annähernd die ganze Länge des Niederhalters 4 hindurch. Der Formluftverdrängungskörper 8 ist an seinem (in der Zeichnung unteren) Ende über ein Schraubgewinde oder dergleichen ― oder ggf. auch einteilig - mit dem Formstempel 6 fest verbunden. An seinem gegenüberliegenden, aus dem Oberteil 1 herausragenden, Endbereich ist der Formluft-Verdrängungskörper 8 mit einer an sich bekannten Tragplatte 19 fest verbunden, die wiederum über einen Kupplungszapfen 19A mit einem in der Zeichnung nicht dargestellten Antrieb auf und ab bewegbar ist. Das Oberteil 1, bzw. im Ausführungsbeispiel dessen obere Gehäusehälfte 1B, weist großkalibrige Zylinderbohrungen 1C zur gedichteten, gleitbeweglichen Führung der zylindrischen Umfangsflächen 8A der Formluftverdrängungskörper 8 auf. Mit der Zylinderbohrung 1C fluchtet eine weitere Zylinderbohrung 15C der noch zu beschreibenden Kolbenplatte 15, die innerhalb einer zylindrischen Aussparung 16 im Oberteil 1 angeordnet ist und ebenfalls eine gegenüber der Umgebungsatmosphäre gedichtete gleitende Führung des Formluft-Verdrängungskörpers gestattet. Schließlich fluchtet mit den Zylinderbohrungen 1C und 15C eine dritte Zylinderbohrung 4C im Kopfbereich des Niederhalters 4. Diese kann ebenfalls zu Führungsaufgaben für die Zylinderoberfläche 8A des Formluft-Verdrängungskörpers 8 gestaltet sein.

Auf seiner überwiegenden Länge ist der Niederhalter 4 ggf. mit einem etwas größeren inneren Querschnitt als im Bereich seiner Zylinderbohrung 4C versehen und bildet einen Radialspalt 7A zwischen der inneren Niederhalteroberfläche und der Zylinderoberfläche 8A. Je schmaler dieser, bevorzugt ringförmige Radialspalt gehalten ist, umso geringer ist der Formluftverbrauch, wie weiter unten noch ersichtlich. Die Spaltbreite sollte zwischen 0,01 und 15 mm, vorzugsweise zwischen 1 und 5 mm, betragen. Alternativ oder kumulativ betragen die Querschnittsflächenverhältnisse zwischen dem Innenquerschnitt des Niederhalters 4 und dem Außenquerschnitt des Formluftverdrängungskörpers 8 zwischen 1:0,4 und 1:0,99 und besonders bevorzugt zwischen 1:0,8 und 1:0,99. Die größte Querschnittfläche des sich an das untere Ende des Formluft-Verdrängungskörpers 8 anschließenden Formstempels 6 kann ähnliche Querschnittmaße wie der Formluft-Verdrängungskörper 8 aufweisen; er kann auch in Maßen kleiner oder größer dimensioniert sein. Auf diese Weise muss beim Vorschieben des Formstempels 6 nur so viel unter Arbeitsdruck stehendes Formluftvolumen nachgeführt werden, wie es dem Volumen des Spalt-oder Ringraumes 7B entspricht. Es ist auch möglich, nicht kreisrunde Querschnitte für den Formstempel und den Formluft-Verdrängungskörper 8 zu wählen, wenn z.B. ein im Querschnitt nicht kreisrunder, sondern ovaler oder anderweitig länglich geformter Kunststoffbehälter hergestellt werden soll. In diesen Fällen, in denen auch dann der Mündungsquerschnitt des Niederhalters entsprechend der Form des Behältermündungsrandes geformt sein muss, ändert sich das Oberteil entsprechend.

Die Niederhalter 4 können insgesamt rückwandlos gestaltet sein und mithin aus einem rohrförmigen Rohling, z. B. durch Drehen, kostengünstig hergestellt werden.

Um eine gleichmäßige Ausbildung der Mündungsränder aller in einem Schuss aus der Kunststofffolie oder Platte gemeinsam hergestellten Kunststoffbehälter zu ermöglichen, ist die mehrere Niederhalter zusammenfassende Kolbenplatte 15 vorgesehen, die innerhalb einer zylindrischen Aussparung 16 des Oberteils 1, z.B. pneumatisch oder hydraulisch verfahrbar ist. Dadurch können alle Niederhalter 4 gemeinsam vor- und zurückbewegt werden, um die Kunststofffolie oder―platte festlegen und wieder freigeben zu können. Zu diesem Zweck ist die Kolbenplatte 15 in einem im Oberteil ausgebildeten Zylinderraum (zylindrische Aussparung 16) in radial gedichteter Form geringfügig auf- und nieder bewegbar, wobei in der Regel ein Fahrweg von etwa 1 mm ausreicht. Die Kolbenplatte 15 kann eine etwa rechteckige Querschnittsfläche aufweisen, wobei die Eckbereiche hinreichend stark gerundet sind, wenn eine vereinfachte Dichtung gegenüber der zylindrischen Aussparung 16 im Oberteil 1 gewünscht ist. In dem in der Zeichnung dargestellten und insoweit bevorzugten Ausführungsbeispiel ist die zylindrische Aussparung 16 in der unteren Gehäusehälfte 1 A des Oberteils 1 untergebracht und wird nach oben von der oberen Gehäusehälfte 1 B verschlossen, die etwa plattenförmig gestaltet und somit einfach herstellbar sein kann. Die Kolbenplatte 15 weist zum dichtenden Durchführen der Formluftverdrängungskörper 8 entsprechend dimensionierte Zylinderbohrungen 15C auf, die übliche Dichtringe tragen können. Zwar ist es grundsätzlich möglich, die Kolbenplatte 15 auf beliebige Weise, also auch durch mechanische oder elektromagnetische Mittel zu bewegen, doch wird sie bevorzugt durch ein Fluid und besonders bevorzugt pneumatisch auf und nieder bewegt, wobei die vorerwähnten Dichtungen den Kolbenraum geeignet abdichten.

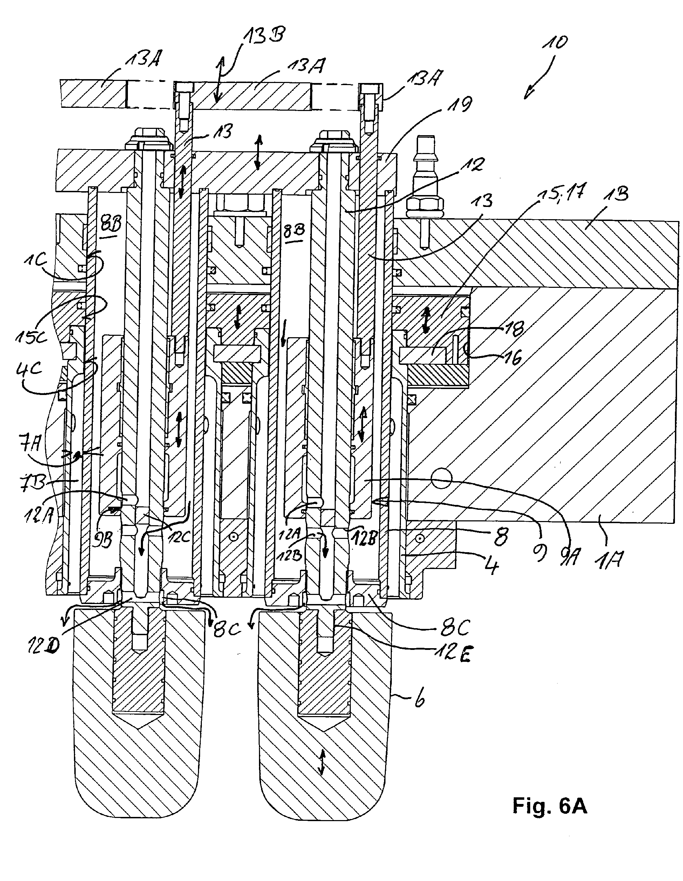

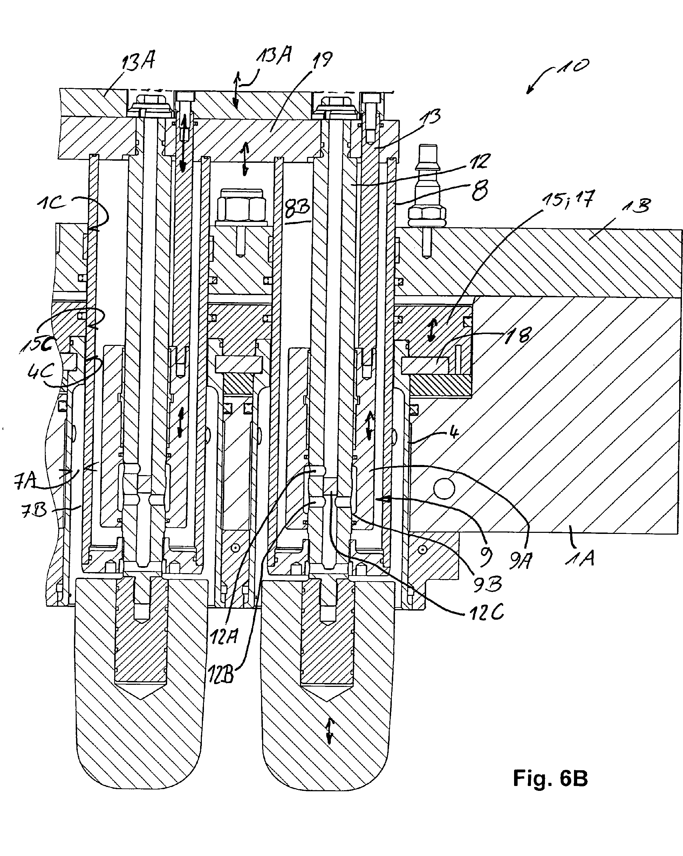

Die Verbindung zwischen der Kolbenplatte 15 und den Niederhaltern 4 kann in beliebiger Weise erfolgen und auch lösbar sein. Letzteres ist dann erwünscht, wenn die Niederhalter austauschbar sein sollen, sei es in einem Schadensfall oder sei es, dass die Prägeränder am unteren Niederhalterende geändert werden sollen. Um hier ein Auseinanderbauen des Oberteils 1 zu vermeiden, können zu diesem Zwecke Verriegelungsmittel, insbesondere Schieber 18 vorgesehen sein, die außen am Oberteil betätigt werden können. Hierbei ergibt sich eine vereinfachte Herstellung der Kolbenplatte 15, wenn diese aus zwei miteinander verbindbaren Teilplatten besteht, zwischen denen Aussparungen zur Aufnahme der Verriegelungselemente vorgesehen sind. Derartige Verriegelungselemente greifen sowohl in die Kolbenplatte als auch am Außenrand der Niederhalter 4 ein, wie besonders deutlich aus Figuren 6A/6B ersichtlich.

Bei der Ausführungsform nach Figur 5 ist ein in seiner Längsrichtung durchbohrter Verschlusskörper 11 vorgesehen, um die Durchbrechung des Oberteils für den Formluft-Verdrängungskörper nach außen dichtend zu verschließen und um eine den Formstempel ersatzweise tragende Kolbenstange gleitgedichtet aufzunehmen. Dieser gestattet es, in einer Vorrichtung nach der Erfindung ältere oder konventionelle Werkzeuge einzusetzen, die z.B. die Verwendung mit einem Formluftverdrängungskörper nicht erlauben.

Die Zuführung der Formluft kann auf unterschiedliche Weise erfolgen. In den Ausführungsbeispielen nach Figuren 1 bis 4 erfolgt die Formluftzufuhr auf konventionelle Weise, indem innerhalb des Oberteils 1 Formluftkanäle eingearbeitet sind, die an den die Niederhalter aufnehmenden Aussparungen im Oberteil münden. Wanddurchbrechungen 4A der Niederhalter 4 gestatten dann das Einströmen von Formluft in den innerhalb des Niederhalters 4 gebildeten Formgasraum 7.

Eine alternative Formgaszuführung ergibt sich aus Figuren 6A/B, gemäß der eine Formgas-Verteilanordnung vorgesehen ist, die eine mehrere Formluft-Verdrängungskörper 8 rückseitig zusammenfassende Formluft-Verdrängungskörpertragplatte 19 und die Formluftverdrängungskörper 8 umfasst. Zu diesem Zweck weisen die Formluftverdrängungskörper 8 einen inneren Hohlraum 8B auf, in den Formluft aus der Tragplatte 19 oben einströmen und aus dem die Formluft am unteren Ende, vorzugsweise oberhalb des Formstempels 6, wieder ausströmen kann.

Die Formgasverteilanordnung kann Einzelventile 9 aufweisen, die entweder in der Tragplatte 19 oder am oder im Formluft-Verdrängungskörper 8 vorgesehen sind. Dadurch kann das je Produktionsschuss verbrauchte, unter Überdruck gehaltene Formgas mengenmäßig weiter reduziert werden.

Einzelne Formluftdurchlassventile 9, wie sie in Figuren 6A/B dargestellt sind, verringern das nachzuführende Formgasvolumen besonders deutlich: Hierzu kann innerhalb des als Durchleitmittel für Formluft dienenden Hohlraums 8B ein kombiniertes Lufteinlass und -auslassrohr 12 vorgesehen sein, das an seinem oberen Ende frei zur Atmosphäre mündet und hierzu durch die Tragplatte 19 hindurch geführt sein kann. Es mündet mit seinem unteren Endbereich z. B. in einer Verschlussplatte 8C des hohlen Formluft-Verdrängungskörpers 8 und kann im Übrigen auch einen Schraubanschluss 12E oder dergleichen zur auswechselbaren Aufnahme unterschiedlicher Formstempel 6 aufweisen. Ein über das kombinierte Einlass/Auslassrohr 12 geschobener ringhülsenförmiger Steuerschieber 9A ist in gedichteter und gleitbeweglich geführter Form mittels einer durch die Tragplatte 19 hindurch geführten Steuerstange 13 entlang des Einlass/Auslassrohres 12 verschiebbar. Zu diesem Zweck können alle Steuerstangen 13 mittels einer Tragplatte 13A und Antriebsmittel 13B gemeinsam auf und ab bewegt werden. Der Steuerschieber 9A weist eine oder mehrere so genannte Steuerkanten 9B auf, die mit Steuerbohrungen 12A, 12B des Einlass-Auslassrohres 12 zusammenwirken können. Ein Verschlussstopfen 12C unterteilt den inneren Kanal des Einlass/Auslassrohres 12 in zwei getrennte Arbeitsbereiche.

Die Funktion des Formluftdurchlassventiles 9 ist folgende: In der in Figur 6A dargestellte Formlufteinlassstellung befindet sich der Steuerschieber 13 in seiner obersten Arbeitsposition und gibt dadurch mindestens eine untere Steuerbohrung 12A unterhalb des Verschlussstopfens 12C frei, so dass das Formgas aus dem Hohlraum 8B des Formluft-Verdrängungskörpers 8 über eine Querverteilung z.B. in Gestalt einer Querbohrung 12D aus dem Einlass/Auslassrohr 12 austreten kann. Diese Querverteilung ist bevorzugt im Bereich der Verschlussplatte 8C des Formluft-Verdrängungskörpers 8 angeordnet und mündet, bevorzugt, dort in einen Ringkanal 8C zur Gleichverteilung des Formgases in alle Radialrichtungen. Dadurch werden über den Behälterumfang gleiche Strömungs- und mithin gleichmäßige Abkühlverhältnisse in der Formluftauslassstellung erzielt. Hier befindet sich der Steuerschieber 9A in seiner tiefsten Arbeitsstellung, in der er die unteren Steuerbohrungen 12A gegenüber dem Hohlraum 8B absperrt und andererseits die untere Steuerbohrung 12A mit der oberhalb des Verschlussstopfens 12C gelegenen Steuerbohrung 12B verbindet. Auf diese Weise kann das zunächst unter Druck stehende Formgas zurückströmen und zur Atmosphäre hin austreten.

### BEZUGSZEICHENLISTE

| | | | |
|---|---|---|---|
| 1 | Oberteil | 9B | Steuerkanten |
| 1A | untere Gehäusehälfte | 10 | Druckgas-Thermoform- |
| 1B | obere Gehäusehälfte | | Vorrichtung |
| 1C | Zylinderbohrung | 11 | Verschlusskörper |
| 2 | Unterteil | 12 | Einlass-/Auslassrohr |
| 3 | formgebende Kavität | 12A | untere Steuerbohrung |
| 3A | Formeinsatz | 12B | obere Steuerbohrung |
| 4 | Niederhalter | 12C | Verschlussstopfen |
| 4A | Wanddurchbrechungen | 12D | Querbohrung |
| 4C | Zylinderbohrung | 12E | Schraubanschluss |
| 5 | Kunststofffolie oder ―platte | 13 | Steuerstange |
| 5A | Behälterrohling | 13A | Tragplatte |
| 5B | fertiger Behälter | 13B | Antriebsmittel |
| 6 | Formstempel | 14 | Mittel zum Durchleiten von |
| 7 | Formgasraum | | Formluft |
| 7A | Ringspalt | 15 | Kolbenplatte |
| 7B | Spalt- oder Ringraum | 15C | Zylinderbohrung |
| 8 | Formluft-Verdrängungskörper | 16 | zylindrische Aussparung |
| 8A | Zylinderfläche | 17 | Niederhalter-Tragplatte |
| 8B | Hohlraum | 18 | Schieber |
| 8C | Verschlussplatte | 19 | Tragplatte |
| 8D | Ringkanal | 19A | Kupplungszapfen |
| 9 | Formluftdurchlassventil | 19B | Formluftzuführleitung |
| 9A | Steuerschieber | 20 | Ruheraum |

## Patentansprüche

1. Druckgas-Thermoform-Vorrichtung zum, insbesondere gleichzeitigen, Herstellen von Kunststoffbehältern aus thermoplastisch verformbaren Kunststofffolien oder -platten (5)
mit einem ersten Teil (1) und mit einem zweiten Teil (2),
bei der das zweite Teil (2) mindestens eine, insbesondere mehrere, formgebende Kavität/Kavitäten (3) umfasst und
bei der das erste Teil (1) je Kavität (3) einen Ruheraum (20) und/oder einen, insbesondere von dem Ruheraum (20) aufgenommenen, innen hohlen Niederhalter (4) zum zeitweisen Festlegen der Kunststofffolie oder -platte (5) sowie einen innerhalb des Ruheraumes (20) oder des Niederhalters (4) verschiebbaren, mit Formluft einsparenden Mitteln versehenen Formstempel (6) umfasst, und
bei der einem Raum/Räumen (7) zwischen der Wandung des Ruheraums (20) oder dem Niederhalter (4), der Kunststofffolie oder -platte (5) und dem Formstempel (6) Formluft unter Druck zuführbar ist,
**dadurch gekennzeichnet,**
**dass** zumindest ein Formluft-Verdrängungskörper (8) je Kavität (3) vorgesehen ist,
**dass** sich der zumindest eine Formluft-Verdrängungskörper (8) zumindest mit einem Teil seiner Länge durch zumindest eine Teillänge des Ruheraumes (20) oder des Niederhalters (4) und des ersten Teils (1) hindurch erstreckt, und
**dass** Mittel zum gemeinsamen Verlagern des zumindest einen Formluft-Verdrängungskörpers (8) mit dem Formstempel (6) bezüglich des ersten Teils (1) in gegenüber der Umgebungsatmosphäre gedichteter, gleitend geführter Weise vorgesehen sind.

2. Vorrichtung nach Anspruch 1, **dadurch gekennzeichnet, dass** der zumindest eine Formluft-Verdrängungskörper (8) ausschließlich bezüglich des ersten Teils (1) gedichtet ist.

3. Vorrichtung dem Oberbegriff des Anspruchs 1, insbesondere nach Anspruch 1 oder 2, **gekennzeichnet durch** eine mehrerer Niederhalter (4) zusammenfassende Kolbenplatte (15), die innerhalb einer zylindrischen Aussparung (16) des ersten Teils (1), insbesondere pneumatisch oder hydraulisch, verfahrbar ist und die zugehörenden Niederhalter (4) zum lösbaren Festlegen der Kunststofffolie oder -platte (5) vor- und zurückbewegt.

4. Vorrichtung nach dem Oberbegriff von Anspruch 1, insbesondere nach einem der Ansprüche 1 bis 3, mit einer mehrere Niederhalter (4) zusammenfassenden, innerhalb des ersten Teils (1) vor- und zurückbewegbaren Niederhalter-Tragplatte (17) und mit von außen an dem ersten Teil (1) betätigbaren Verriegelungselementen, wie Schiebern (18), zum lösbaren Verbinden der Niederhalter (4) mit der Niederhalter-Tragplatte (17).

5. Vorrichtung nach dem Oberbegriff von Anspruch 1, insbesondere nach einem der Ansprüche 1 bis 4, mit einer mehrere Formluft-Verdrängungskörper (8) und/oder Formstempel (6) rückseitig zusammenfassenden, bezüglich des ersten Teils (1) vor- und zurückbewegbaren Formluft-Verdrängungskörper-Tragplatte (19), die als Formgas-Verteiler ausgestaltet ist und zusammen mit den Formluft-Verdrängungskörpern (8) eine Formgas-Verteilanordnung bildet.

6. Vorrichtung nach Anspruch 5, **dadurch gekennzeichnet, dass** die Formgas-Verteilanordnung Einzelventile für die Versorgung jedes Formluftraumes (7) mit Formgas aufweist.

7. Vorrichtung nach einem der Ansprüche 1 bis 6, **dadurch gekennzeichnet, dass** der mindestens eine Formluft-Verdrängungskörper (8) Mittel (14; 8B) zum Durchleiten von Formluft aufweist.

8. Vorrichtung nach einem der Ansprüche 1 bis 7, **dadurch gekennzeichnet, dass** der mindestens eine Formluft-Verdrängungskörper (8) mindestens ein Formluftdurchlassventil (9) aufweist.

9. Vorrichtung nach einem der Ansprüche 1 bis 8, **dadurch gekennzeichnet, dass** die Breite eines zwischen der Außenoberfläche des Formluft-Verdrängungskörpers (8) und der Innenfläche des Ruheraumes (20) oder des Niederhalters (4) verbleibenden Radialspaltes (7A) 0,01 mm bis 15 mm, vorzugsweise 0,1 mm bis 5 mm beträgt, und/oder, dass im Bereich des Fahrwegs des Formluft-Verdrängungskörpers (8) das Querschnittsflächenverhältnis zwischen dem Innenquerschnitt des Ruheraumes (20) oder des Niederhalters (4) und der Außenoberfläche des Formluft-Verdrängungskörpers (8) zwischen 1:0,4 bis 1:0,999 und vorzugsweise zwischen 1:0,8 und 1:0,99 liegt.

10. Vorrichtung nach einem der Ansprüche 1 bis 9, **gekennzeichnet durch** einen in seiner Längsrichtung durchbohrten Verschließkörper (11) zum nach außen hin dichten Verschließen der Durchbrechung (1A) des ersten Teils (1) für den Formluft-Verdrängungskörper (8) und zur dichtenden, gleitenden Aufnahme einer den Formstempel (6) tragenden Kolbenstange (12) als Ersatz für den Formluft-Verdrängungskörper (8).

11. Vorrichtung nach einem der Ansprüche 1 bis 10, **dadurch gekennzeichnet, dass** der Niederhalter (4) rückwandlos gestaltet ist.
